# EUROPEAN PATENT APPLICATION

(11) **EP 2 063 344 A1**
(43) Date of publication of application: **27.05.2009**
(21) Application number: 07121144.5
(22) Date of filing: 20.11.2007
(51) Int. Cl.: G06F 3/023, H04M 1/725

(54) **Electroluminescence device illuminating keyboard from different electroluminescent parts depending on the direction of the keyboard**

(71) Applicant: Giga-Byte Communications, Inc., Taipei (TW); Giga-Byte Technology Co., Ltd., Hsin-Tien Taipei County (TW)
(72) Inventor: Lo, Kuo-Jung, Hsin-Tien (TW)
(74) Representative: Loisel, Bertrand

(57) **Abstract**

An electroluminescence device includes a first electroluminescence part, a second electroluminescence part, a key layer, a direction detecting module, a circuit switch module and a touch induced circuit. The first electroluminescence part and the second electroluminescence part are mounted on the same plane. The key layer is stacked above the first electroluminescence part and the second electroluminescence part. The direction detecting module detects the direction and triggers the circuit switch module to trigger the electroluminescence part to radiate based on the placement direction. The touch induced circuit detects different signals coming from the different placement direction of the pressed keys so the device can trigger the luminescence of an electroluminescence part which corresponds to the placement direction to have different display based on the different placement direction.

## Description

### BACKGROUND

### Field of the Invention

The invention relates to an electroluminescence device and more particularly to an electroluminescence device of a mobile phone which will radiate from different electroluminescence part according to the direction of placing the mobile phone so the keys can display accordingly.

### Related Art

In a highly developed communicating society, almost everyone has a mobile phone, which includes more and more functions as the technologies improve, such as watching video, taking photos and playing music. Except the demand of a multiple function mobile phone, to consumer size also matters. Consumer will more likely to carry a mobile phone if the phone becomes thinner and lighter. Therefore how to reduce the size of the phone becomes an important topic. Nowadays, many phones are combining keys and the touch panel together in order to reduce the occupied space of the keys. However, the responding speed of this kind of touch panel is still not as faster as the physical kind of keys. Besides, every time the touch panel is turning on, the battery will be consumed, which will reduce the operating time of a mobile phone.

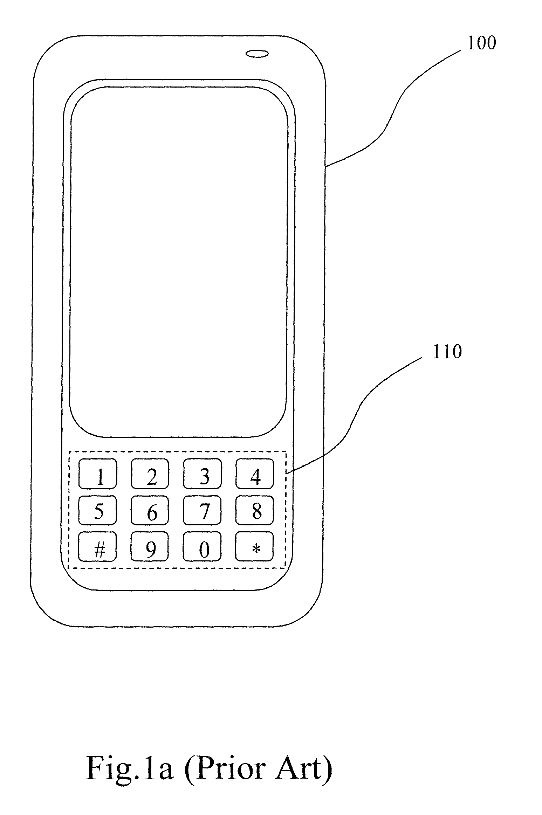

In order for consumers to operate the above function smoothly, a mobile phone is usually designed in a form of rectangular as shown in FIG. 1a, which is a typical figure of a mobile phone. There are two reasons for this kind of design. First, it is easy for user to talk. Second, most of the mobile phones 100 are embedded a camera module; therefore the mobile phone 100 is designed to be used laterally in order to allow a user to have the same holding feeling as holding a real camera. However, when a mobile phone 100 rotates 90 degree to the left, operating the keys 231 will become harder because the keys 231 also rotates 90 degree and the print on the keys 231 will become hard to recognize due to the wrong direction.

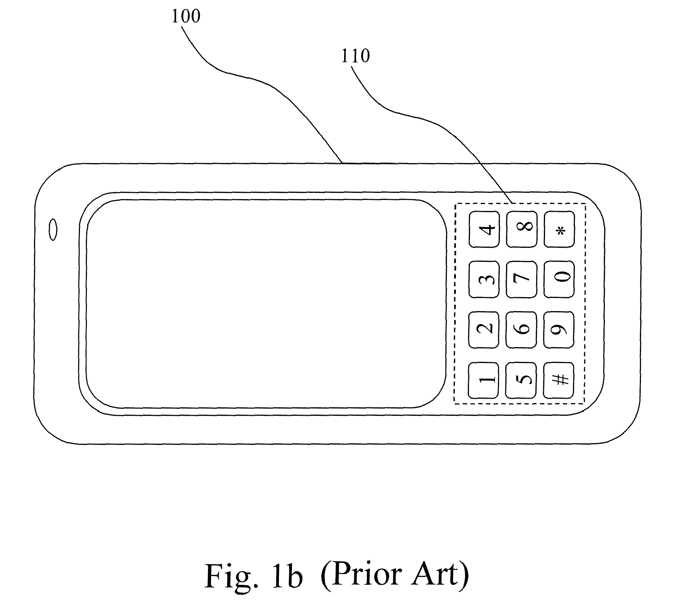

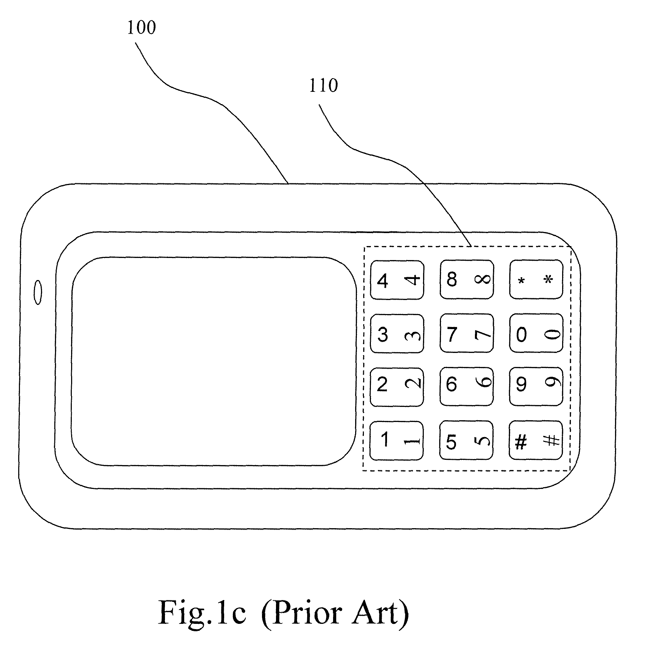

Taking the printed character on the keys 231 as an example, when the mobile phone 100 is in the right direction, the number key "1" will be shown just like the one in FIG.1a. However, when the mobile phone rotate 90 degree to the left as shown in FIG.1b, the number key "1" will become " 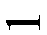 ". In order to solve this problem, as shown in FIG.1c, some manufacturers will print another direction of the characters on the keys 231. However, simultaneously printing two kinds of characters on one key 231 will make the size of the character become smaller and make it even more difficult to see.

### SUMMARY

According to the foregoing problems, an electroluminescence device, especially for keys of a mobile phone is provided, where when the mobile phone is placed in different direction, the electroluminescence device can trigger different electroluminescence part of the keys to display the keys that respond to the direction.

In order to achieve the forgoing purposes, the electroluminescence device includes: a first electroluminescence part, a second electroluminescence part, a key layer, a direction detecting module, a circuit switch module and a touch induced circuit.

The first electroluminescence part and the second electroluminescence part are on the same plane. The direction detecting module is used for detecting the placement direction of the mobile phone, where outputs a corresponding signal based on the placement direction of the direction detecting module. The key layer is stacked above the first electroluminescence part and the second electroluminescence part, where includes at least one key. Each key is separately and not repeatedly mounted above the boundary of the first electroluminescence part and the second electroluminescence part. The direction detecting module is electrically and respectively connected to the first electroluminescence part and the second electroluminescence part, which is used to detect the placement direction of the electroluminescence device and trigger the electroluminescence part which corresponds to the placement direction. The circuit switch module is electrically and respectively connected to the direction detecting module, the first electroluminescence part and the second electroluminescence part, which is used to trigger the luminescence of the first electroluminescence part and the second electroluminescence part. The touch induced circuit is electrically connected to the direction detecting module, which is used to detect the signals coming from a pressed key when it is placed in different direction.

If a direction of the electroluminescence device is in a first position, the first electroluminescence part will be triggered to radiate, and if a direction of the electroluminescence is in a second position, the second electroluminescence part will be triggered to radiate. The touch induced circuit is electrically connected to the direction detecting module, which is used to detect the different signals corresponding to the first symbol and the second symbol on the pressed key.

The electroluminescence device of the invention is suitable to apply to a portable device, which will switch between different electroluminescence parts in order to radiate based on the placement direction, so the keys can display the symbols with right direction.

### BRIEF DESCRIPTION OF THE DRAWINGS

The present invention will become more fully understood from the detailed description given below, which is for illustration only and thus is not limitative of the present invention, wherein:
FIG. 1a is a diagram showing a known mobile phone keys arrangement in vertical;
FIG.1b is a diagram showing a known mobile phone keys arrangement in horizon;
FIG.1c is a diagram showing a known mobile phone keys arrangement;
FIG.2a is a diagram showing a preferred illustrative embodiment of the invention;
FIG.2b is a diagram showing the combination of the first electroluminescence part and the second electroluminescence part;
FIG.2c is a diagram showing the combination of the first electroluminescence part, the second electroluminescence part and the key layer;
FIG.3a is a diagram showing the vertical placement of the invention; and
FIG.3b is a diagram showing the horizon placement of the invention.

### DETAILED DESCRIPTION

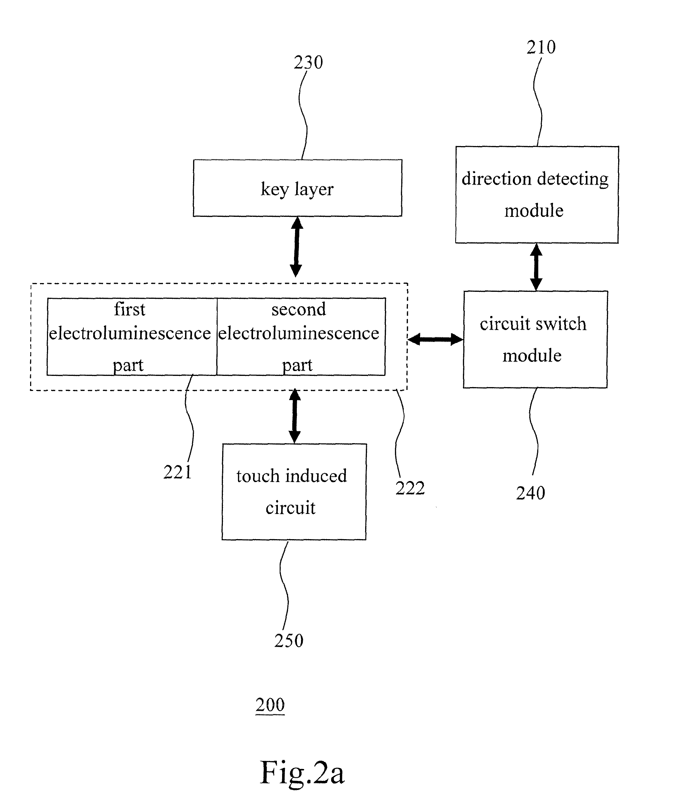

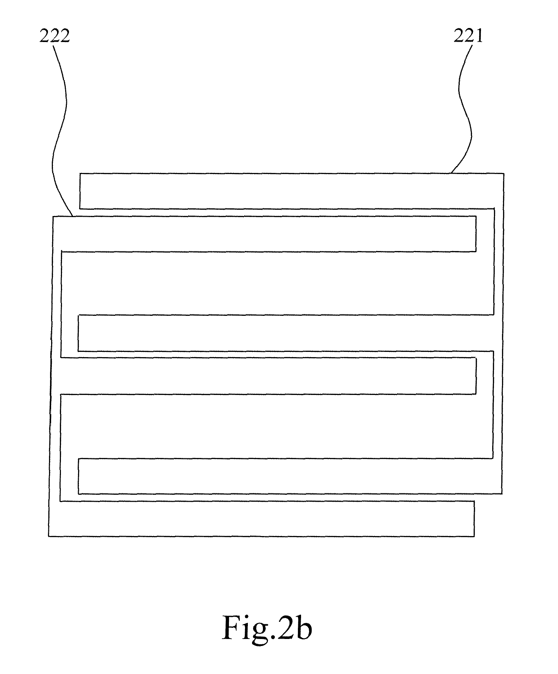

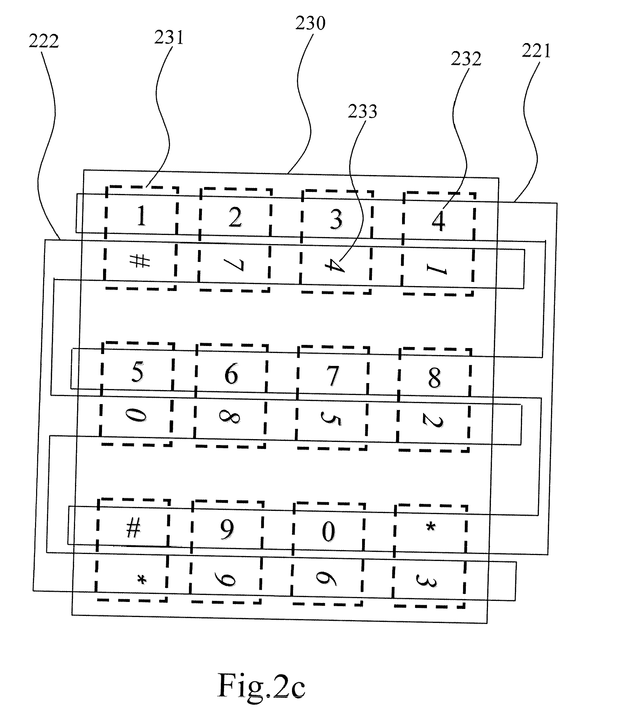

FIG.2 is a diagram showing a preferred embodiment of the invention, where the electroluminescence device 200 is applied to the keys of a mobile phone. The electroluminescence device 200 includes a direction detecting module 210, a first electroluminescence part 221, a second electroluminescence part 222, a key layer 230, a circuit switch module 240 and a touch induced circuit 250.

The direction detecting module 210 is used to detect the placement direction of the electroluminescence device 200, and outputs the responding to the circuit switch module 240 based on the placement direction. The direction detecting module 220 can be but not limited to an optical sensor, an acceleration sensor or a mercury switch, where the principle of the optical sensor is the change of the position of a ball which is caused by rotation will shield the infrared ray so the output terminal level will be changed that the rotation of the device can be detected.

The first electroluminescence part 221 and the second electroluminescence part 222 are both made by an electroluminescence material. The first electroluminescence part 221 and the second electroluminescence part 222 are mounted on the same plane. Here, multiple first electroluminescence parts 221 can be parallel arranged and connected from one end, so the figure will be like "∃". Besides, multiple second electroluminescence parts 222 also can be arranged like the first electroluminescence parts where the figure can be "E". Moreover, the first electroluminescence parts 221 and the second electroluminescence parts 222 can be interlaced but not overlapped, which will have a figure like the one shown in FIG.2b, where is the diagram showing the combination of the first electroluminescence part 221 and the second electroluminescence part 222.

FIG.2c is a diagram showing the combination of the first electroluminescence part 221, the second electroluminescence part 222 and the key layer 230. The key layer 230 is stacked above the first electroluminescence part 221 and the second electroluminescence part 222. In FIG.2c, each key and its region is illustrated by a dotted line frame. The key layer 230 includes at least one key 231, which is respectively and not repeatedly mounted above the boundary of the first electroluminescence part 221 and the second electroluminescence part 222, and covers part of the first electroluminescence part 221 and part of the second electroluminescence 222. Some first symbols 232 and a plurality of second symbols 233 are further mounted on the key 231, where the first symbols 232 are mounted on the positions which correspond to the first electroluminescence part 221 and the second symbols 233 are mounted on the positions which correspond to the second electroluminescence part 222. The first symbol and the second symbol include but not limited to the numbers, symbol for answering the phone, and symbols.

These first symbols 232 and second symbols 233 can be mask type or transparent type of symbols. When the first electroluminescence part 221 is radiating, a transparent type can show the figure of the first symbol 232 directly. If the second symbol is a mask type, then when the second electroluminescence part 222 is radiating, the light will pass through the periphery of the second symbol 233. On the other hand, when it is transparent type, the light is passing through the second symbol 233, where directly shows the figure of the second symbol 233.

The circuit switch module 240 is electrically and respectively connected to the direction detecting module 210, the first electroluminescence part 221 and the second electroluminescence part 222, to base on the placement direction of the direction detecting module 210 to trigger the luminescence of the first electroluminescence part 221 or the second electroluminescence part 222. For example, when the direction detecting module is placed vertically, the circuit switch module 240 will only conduct the current to the first electroluminescence part 221 to make it radiate, and the first symbol 232 can be shown by the light radiated from the circuit switch module. When the direction detecting module 210 is placed horizontally, the circuit switch module will only conduct the current to the second electroluminescence part 222 to make it radiate so the key 231 can show the second symbol by the light passing through.

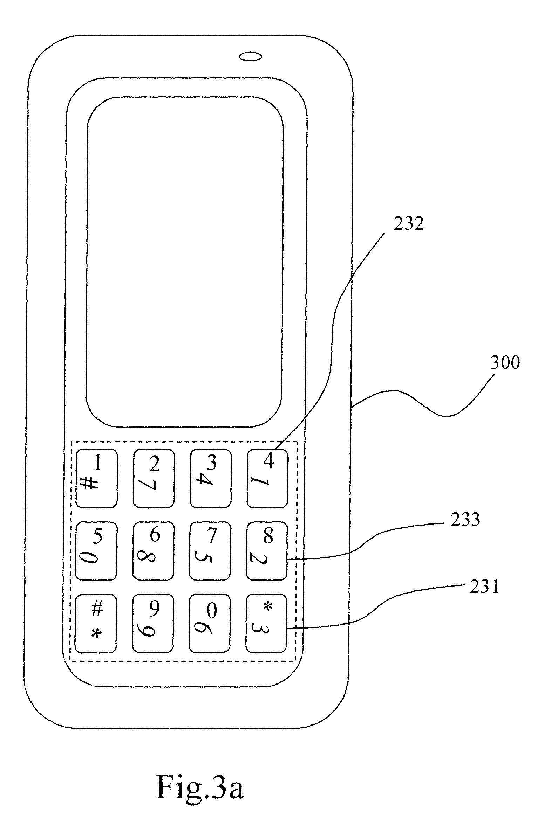

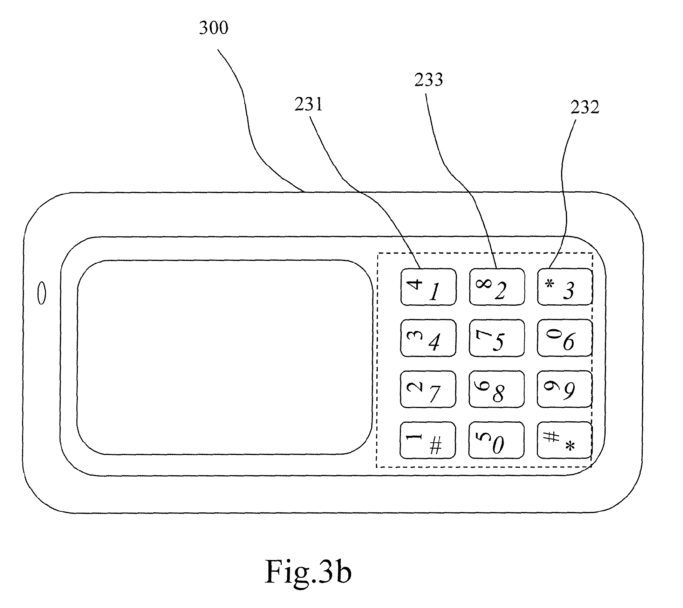

The touch induced circuit 250 is electrically connected to the direction detecting module 210, where is used to detect the signals of a pressed key when a mobile phone is placed in different direction. The order or sequence of the keys will be different when the mobile phone is placed differently so user's operating habit may correspondingly change. FIG.3a and FIG.3b are diagrams respectively show the invention when placed vertically and horizontally. The black letters in FIG.3a and FIG.3b represent the letters which are currently shown, and the Italian type letters represent the letters which are not currently shown. For example, the black letters in FIG.3a represent the first symbol 232, and the Italian letters represent the second symbol 233. Similarly, the black letters in FIG.3b represent the second symbol 233 and the Italian letters represent the first symbol 232.

Taking the keys 231 of a mobile phone 300 as an example, an order to the number keys of a regular mobile phone 300 from left to right and top to bottom will be "1", "2", "3", "4", "5", "6", "7", "8", "#", "9", "0", "*",just like the first symbol 232 shown in FIG.3a. If the mobile phone 300 is rotated 90 degree to the left and placed horizontally, based on the above arrangement order, at this time the order of the first symbol will become "4", "8", "#", "3", "7", "0", "2", "6", "9", "1", "5", "#", as shown as FIG.1c, which will cause the difficulties in recognition.

Therefore, in order to reduce the difficulties in recognizing the symbols when the mobile phone is placed differently from its original direction, here the numbers represented by the first symbol 232 and the numbers represented by the second symbol 233 will both be arranged from left to the right and from top to the bottom. The touch induced circuit 250 will determine what the corresponding signal is to the key 231 based on the placement direction of the direction detecting module 210. Thus, no matter the placement of the mobile phone 300 is vertical or horizon, the using habit need not be changed accordingly.

The invention is to make the mobile phone be able to change its radiating part according to the placement direction, which allow a user not to change his using habit and just press the key by instinct. In addition, since the key is shown by backlight, the recognition can be more easily to achieve than the traditional print type character on the key.

While the illustrative embodiments of the invention have been set forth for the purpose of disclosure, modifications of the disclosed embodiments of the invention as well as other embodiments thereof may occur to those skilled in the art. Accordingly, the appended claims are intended to cover all embodiments, which do not depart from the spirit and scope of the invention

## Claims

1. A electroluminescence device, comprising:
a plurality of first electroluminescence parts;
a plurality of second electroluminescence parts, wherein the first electroluminescence parts and the second electroluminescence parts are mounted on the same plane;
a key layer, which is stacked above the first electroluminescence part and the second electro luminescence part, and includes at least one key, wherein the key is mounted above the boundary of the first electroluminescence part and the second electroluminescence part and covers the first electroluminescence part and the second electroluminescence part; and
a direction detecting module, which is electrically and respectively connected to the first electroluminescence parts and the second electroluminescence parts, wherein the direction detection module is used to detect the placement direction of the electroluminescence device and trigger the electro luminescence part which corresponds to the placement direction.

2. The electroluminescence device of claim 1, wherein the keys further include a plurality of first symbols and a plurality of second symbols thereon, where the first symbols are mounted corresponding to the first electroluminescence part and the second symbols are mounted corresponding to the second electroluminescence part.

3. The electroluminescence device of claim 2, wherein the first symbols include a number key, a communication key, and a symbol key.

4. The electroluminescence device of claim 2, wherein the second symbols include a number key, a communication key, and a symbol key.

5. The electroluminescence device of claim 1, further comprising a circuit switch module which is electrically and respectively connected to the direction detecting module, the first electroluminescence part and the second electroluminescence part to trigger the luminescence of the first electroluminescence part and the second electroluminescence part.

6. The electroluminescence device of claim 1, further comprising a touch induced circuit which is electrically connected to the direction detecting module to detect the signals from the pressed keys when placed in different direction.

## Amended claims

### Amended claims in accordance with Rule 137(2) EPC.

**1.** A electroluminescence device, comprising:
a plurality of first electroluminescence parts (221);
a plurality of second electroluminescence parts (222), wherein the first electroluminescence parts (221) and the second electroluminescence parts (222) are mounted on the same plane;
a key layer (230), which is stacked above the first electroluminescence part (221) and the second electroluminescence part (222), and includes at least one key, wherein the key is mounted above the boundary of the first electroluminescence part (221) and the second electroluminescence (222) part and covers the first electroluminescence part (221) and the second electroluminescence part (222); and
a direction detecting module (210), which is electrically and respectively connected to the first electroluminescence parts (221) and the second electroluminescence parts (222), wherein the direction detection module (210) is used to detect the placement direction of the electroluminescence device and trigger the electroluminescence part which corresponds to the placement direction.

**2.** The electroluminescence device of claim 1, wherein the keys further include a plurality of first symbols (232) and a plurality of second symbols (233) thereon, where the first symbols (232) are mounted corresponding to the first electroluminescence part (221) and the second symbols (233) are mounted corresponding to the second electroluminescence part (222).

**3.** The electroluminescence device of claim 2, wherein the first symbols (232) include a number key, a communication key, and a symbol key.

**4.** The electroluminescence device of claim 2, wherein the second symbols (233) include a number key, a communication key, and a symbol key.

**5.** The electroluminescence device of claim 1, further comprising a circuit switch module (240) which is electrically and respectively connected to the direction detecting module (210), the first electroluminescence part (221) and the second electroluminescence part (222) to trigger the luminescence of the first electroluminescence part (221) and the second electroluminescence part (222).

**6.** The electroluminescence device of claim 1, further comprising a touch induced circuit (250) which is electrically connected to the direction detecting module (210) to detect the corresponding signals from the pressed keys based on the direction detected by the direction detecting module (210).
